# EUROPÄISCHE PATENTSCHRIFT

(11) **EP 1 797 534 B1**
(45) Veröffentlichungstag und Bekanntmachung des Hinweises auf die Patenterteilung: **09.10.2019**
(21) Anmeldenummer: 05771786.0
(22) Anmeldetag: 17.08.2005
(51) Int. Cl.: G06T 7/00

(54) **VERFAHREN FÜR DIE ERFASSUNG EINER OPTISCHEN STRUKTUR**
METHOD FOR DETECTING AN OPTICAL STRUCTURE
PROCEDE DE DETECTION D'UNE STRUCTURE OPTIQUE

(30) Priorität: 01.10.2004 DE 4048400 2
(43) Veröffentlichungstag der Anmeldung: 20.06.2007
(73) Patentinhaber: ROBERT BOSCH GMBH, 70442 Stuttgart (DE)
(72) Erfinder: MORITZ, Rainer, 70794 Filderstadt (DE); MAAS Alexandre, 71229 Leonberg (DE); SCHICK, Jens, 71083 Herrenberg (DE); WUERZ-WESSEL, Alexander, 70599 Stuttgart (DE)
(86) Internationale Anmeldenummer: PCT/EP2005/054051
(87) Internationale Veröffentlichungsnummer: WO 2006/037688

(56) Entgegenhaltungen:
- EP-A2- 1 256 487
- EP-A2- 1 256 487
- EP-A2- 1 681 577
- EP-A2- 1 681 577
- THOMPSON W B ET AL: "Dynamic occlusion analysis in optical flow fields", IEEE TRANSACTIONS ON PATTERN ANALYSIS AND MACHINE INTELLIGENCE, IEEE COMPUTER SOCIETY, USA, Bd. PAMI-07, Nr. 4, 1. Juli 1985 (1985-07-01), Seiten 374-383, XP002093068, ISSN: 0162-8828, DOI: 10.1109/TPAMI.1985.4767677
- ENKELMANN W ED - ZAFEIRIOU STEFANOS ET AL: "OBSTACLE DETECTION BY EVALUATION OF OPTICAL FLOW FIELDS FROM IMAGE SEQUENCES", IMAGE AND VISION COMPUTING, ELSEVIER, GUILDFORD, GB, Bd. 9, Nr. 3, 1. Juni 1991 (1991-06-01), Seiten 160-168, XP009033182, ISSN: 0262-8856, DOI: 10.1016/0262-8856(91)90010-M
- BROGGI A ET AL: "Self-calibration of a stereo vision system for automotive applications", PROCEEDINGS OF THE 2001 IEEE INTERNATIONAL CONFERENCE ON ROBOTICS AND AUTOMATION. ICRA 2001. SEOUL, KOREA, MAY 21 - 26, 2001; [PROCEEDINGS OF THE IEEE INTERNATIONAL CONFERENCE ON ROBOTICS AND AUTOMATION], NEW YORK, NY : IEEE, US, Bd. 4, 21. Mai 2001 (2001-05-21), Seiten 3698-3703, XP010550713, DOI: 10.1109/ROBOT.2001.933193 ISBN: 978-0-7803-6576-6
- NAYAR S K: "SPHEREO: DETERMINING DEPTH USING TWO SPECULAR SPHERES AND A SINGLE CAMERA", OPTOMECHATRONIC MICRO/NANO DEVICES AND COMPONENTS III : 8 - 10 OCTOBER 2007, LAUSANNE, SWITZERLAND; [PROCEEDINGS OF SPIE , ISSN 0277-786X], SPIE, BELLINGHAM, WASH, Bd. 1005, 8. November 1988 (1988-11-08), Seiten 245-254, XP009017945, ISBN: 978-1-62841-730-2
- POLLASTRI F ED - CALDERARA SIMONE ET AL: "Projection center calibration by motion", PATTERN RECOGNITION LETTERS, ELSEVIER, AMSTERDAM, NL, Bd. 14, Nr. 12, 1. Dezember 1993 (1993-12-01), Seiten 975-983, XP002363595, ISSN: 0167-8655, DOI: 10.1016/0167-8655(93)90006-Y
- WURZ-WESSEL A ET AL: "Calibration of a free-form surface mirror in a stereo vision system", INTELLIGENT VEHICLE SYMPOSIUM, 2002. IEEE JUN 17-21, 2002, PISCATAWAY, NJ, USA,IEEE, Bd. 2, 17. Juni 2002 (2002-06-17), Seiten 471-476, XP010635869, ISBN: 978-0-7803-7346-4
- THOMPSON W B ET AL: "Dynamic occlusion analysis in optical flow fields" IEEE TRANSACTIONS ON PATTERN ANALYSIS AND MACHINE INTELLIGENCE, IEEE SERVICE CENTER, LOS ALAMITOS, CA, US, Bd. PAMI-7, Nr. 4, Juli 1985 (1985-07), Seiten 374-383, XP002093068 ISSN: 0162-8828
- ENKELMANN W: "OBSTACLE DETECTION BY EVALUATION OF OPTICAL FLOW FIELDS FROM IMAGE SEQUENCES" IMAGE AND VISION COMPUTING, GUILDFORD, GB, Bd. 9, Nr. 3, Juni 1991 (1991-06), Seiten 160-168, XP009033182 ISSN: 0262-8856
- BROGGI A ET AL: "Self-calibration of a stereo vision system for automotive applications" PROCEEDINGS OF THE 2001 IEEE INTERNATIONAL CONFERENCE ON ROBOTICS AND AUTOMATION. ICRA 2001. SEOUL, KOREA, MAY 21 - 26, 2001, PROCEEDINGS OF THE IEEE INTERNATIONAL CONFERENCE ON ROBOTICS AND AUTOMATION, NEW YORK, NY : IEEE, US, Bd. VOL. 1 OF 4, 21. Mai 2001 (2001-05-21), Seiten 3698-3703, XP010550713 ISBN: 0-7803-6576-3
- NAYAR S K: "SPHEREO: DETERMINING DEPTH USING TWO SPECULAR SPHERES AND A SINGLE CAMERA" PROCEEDINGS OF THE SPIE, SPIE, BELLINGHAM, VA, US, Bd. 1005, 8. November 1988 (1988-11-08), Seiten 245-254, XP009017945 ISSN: 0277-786X
- POLLASTRI F: "Projection center calibration by motion" PATTERN RECOGNITION LETTERS NETHERLANDS, Bd. 14, Nr. 12, Dezember 1993 (1993-12), Seiten 975-983, XP002363595 ISSN: 0167-8655
- WURZ-WESSEL A ET AL: "Calibration of a free-form surface mirror in a stereo vision system" INTELLIGENT VEHICLE SYMPOSIUM, 2002. IEEE JUN 17-21, 2002, PISCATAWAY, NJ, USA,IEEE, Bd. 2, 17. Juni 2002 (2002-06-17), Seiten 471-476, XP010635869 ISBN: 0-7803-7346-4
- THOMPSON W B ET AL: "Dynamic occlusion analysis in optical flow fields", IEEE TRANSACTIONS ON PATTERN ANALYSIS AND MACHINE INTELLIGENCE, IEEE COMPUTER SOCIETY, USA, vol. PAMI-07, no. 4, 1 July 1985 (1985-07-01), pages 374-383, XP002093068, ISSN: 0162-8828, DOI: 10.1109/TPAMI.1985.4767677
- ENKELMANN W ED - ZAFEIRIOU STEFANOS ET AL: "OBSTACLE DETECTION BY EVALUATION OF OPTICAL FLOW FIELDS FROM IMAGE SEQUENCES", IMAGE AND VISION COMPUTING, ELSEVIER, GUILDFORD, GB, vol. 9, no. 3, 1 June 1991 (1991-06-01), pages 160-168, XP009033182, ISSN: 0262-8856, DOI: 10.1016/0262-8856(91)90010-M
- BROGGI A ET AL: "Self-calibration of a stereo vision system for automotive applications", PROCEEDINGS OF THE 2001 IEEE INTERNATIONAL CONFERENCE ON ROBOTICS AND AUTOMATION. ICRA 2001. SEOUL, KOREA, MAY 21 - 26, 2001; [PROCEEDINGS OF THE IEEE INTERNATIONAL CONFERENCE ON ROBOTICS AND AUTOMATION], NEW YORK, NY : IEEE, US, vol. 4, 21 May 2001 (2001-05-21), pages 3698-3703, XP010550713, DOI: 10.1109/ROBOT.2001.933193 ISBN: 978-0-7803-6576-6
- NAYAR S K: "SPHEREO: DETERMINING DEPTH USING TWO SPECULAR SPHERES AND A SINGLE CAMERA", OPTOMECHATRONIC MICRO/NANO DEVICES AND COMPONENTS III : 8 - 10 OCTOBER 2007, LAUSANNE, SWITZERLAND; [PROCEEDINGS OF SPIE , ISSN 0277-786X], SPIE, BELLINGHAM, WASH, vol. 1005, 8 November 1988 (1988-11-08), pages 245-254, XP009017945, ISBN: 978-1-62841-730-2
- POLLASTRI F ED - CALDERARA SIMONE ET AL: "Projection center calibration by motion", PATTERN RECOGNITION LETTERS, ELSEVIER, AMSTERDAM, NL, vol. 14, no. 12, 1 December 1993 (1993-12-01), pages 975-983, XP002363595, ISSN: 0167-8655, DOI: 10.1016/0167-8655(93)90006-Y
- WURZ-WESSEL A ET AL: "Calibration of a free-form surface mirror in a stereo vision system", INTELLIGENT VEHICLE SYMPOSIUM, 2002. IEEE JUN 17-21, 2002, PISCATAWAY, NJ, USA,IEEE, vol. 2, 17 June 2002 (2002-06-17), pages 471-476, XP010635869, ISBN: 978-0-7803-7346-4

## Beschreibung

### Stand der Technik

Die Erfindung betrifft ein Verfahren für die Erfassung einer optischen Struktur nach dem Oberbegriff des Anspruchs 1. Unter dem Begriff optische Struktur im Sinne dieser Anmeldung sind beispielsweise Linien, insbesondere Horizontlinien, innerhalb eines Bildes oder Berandungslinien bzw. Konturen von Objekten innerhalb eines von einem Bildaufnahmesystem erfassten Bilds zu verstehen. Derartige optische Strukturen werden von einem Bildaufnahmesystem erfasst, das insbesondere fahrzeuggebunden ist. Die von dem Bildaufnahmesystem erfassten optischen Strukturen dienen beispielsweise für eine Kalibrierung des Bildaufnahmesystems oder der Erfassung der Lage und Bewegung des das Bildaufnahmesystem tragenden Fahrzeugs. Aus den erfassten optischen Strukturen abgeleitete Informationen sind vorteilhaft für die Fahrdynamikregelung des Fahrzeugs und insbesondere auch für die Spurführung einsetzbar.

In Kraftfahrzeugen ist an den Einsatz von Bildaufnahmesystemen für die Erfassung des Fahrzeugumfeldes gedacht. Insbesondere ist die Verwendung von Bildaufnahmesystemen in Verbindung mit Fahrerassistenzsystemen geplant. Dadurch ist es beispielsweise möglich, Bildaufnahmesysteme für eine automatische Abstandsregelung des Kraftfahrzeuges zu einem vorausfahrenden Fahrzeug einzusetzen. Zur Vergrößerung des Bilderfassungsbereichs ist auch der Einsatz von mehreren Bildaufnahmesystemen in einem Kraftfahrzeug geplant, wobei sich deren Erfassungsbereiche auch zumindest teilweise überlappen können. Insbesondere ist auch der Einsatz von Stereokameras vorgesehen, die aus zwei Bildaufnahmesystemen bestehen, welche im Wesentlichen dieselbe Szene aufnehmen.

Verfahren und Vorrichtungen zur Kalibrierung von Bildaufnahmesystemen in Kraftfahrzeugen mittels eines Kalibrierobjekts sind bekannt. Aus DE 10229336.8 A1 sind beispielsweise eine Vorrichtung und ein Verfahren zur Kalibrierung eines Bildaufnahmesystems mittels eines Kalibrierobjektes und eines Lagebezugsensors bekannt. Aus EP 1 120 746 A2 ist weiterhin ein Verfahren zur Kalibrierung eines Bildaufnahmesystems in einem Kraftfahrzeug mittels eines Kalibrierobjekts bekannt. Dabei wird das Kalibrierobjekt mit dem Kraftfahrzeug verbunden und über eine mechanische Verstellvorrichtung in Bezug auf das Kraftfahrzeug ausgerichtet. Die Kalibrierung erfolgt dabei bezüglich der Längsachse des Kraftfahrzeugs. Die Längsachse ist durch symmetrische Merkmale an dem Kraftfahrzeug, insbesondere der Karosserie, konstruierbar. Aufgrund von Fertigungstoleranzen stimmt diese Längsachse jedoch nicht mit der geometrischen Fahrachse überein, die durch die Winkelhalbierende des Gesamtvorspurwinkels der Hinterachse definiert ist. Die Abweichungen zwischen der Längsachse und der geometrischen Fahrachse sind für ein messendes Bildaufnahmesystem, insbesondere bei dessen Verwendung in Fahrerassistenzsystemen in Kraftfahrzeugen, nicht vernachlässigbar, da die geometrische Fahrachse die Fahrtrichtung bei Geradeausfahrt festlegt, unabhängig von der Lage der Längsachse.

Aus DE 102 46 066 A1 ist weiterhin ein Verfahren zur Kalibrierung wenigstens eines Bildaufnahmesystems, das sich an und/oder in und/oder auf einem Kraftfahrzeug befindet, mittels wenigstens eines Kalibrierobjektes, bekannt, bei dem das Bildaufnahmesystem eine erste Bildinformation des Kalibrierobjektes erzeugt, vorzugsweise in Form wenigstens eines Bilddatensatzes, wobei das Kraftfahrzeug eine erste Position bezüglich des Kalibrierobjektes einnimmt, dass dann das Bildaufnahmesystem eine zweite Bildinformation des Kalibrierobjektes erzeugt, vorzugsweise in Form wenigstens eines Bilddatensatzes, wobei das Kraftfahrzeug eine zweite Position bezüglich des Kalibrierobjektes einnimmt, dass dann die Positionsänderung des Kraftfahrzeuges bezüglich des Kalibrierobjektes von der ersten Position zur Einnahme der zweiten Position durch Bewegung des Kraftfahrzeuges erfolgt, und dass dann wenigstens aus der ersten und zweiten erzeugten Bildinformation des Kalibrierobjektes die Ausrichtung des Bildaufnahmesystems bezüglich der geometrischen Fahrachse des Kraftfahrzeuges bestimmt wird. Aus dieser Schrift ist auch eine Vorrichtung zur Kalibrierung wenigstens eines Bildaufnahmesystems, das sich an und/oder in und/oder auf einem Kraftfahrzeug befindet, mit wenigstens einem Kalibrierobjekt und wenigstens einer Auswerteeinheit, die Bildinformationen von dem wenigstens einen Bildaufnahmesystems auswertet, bekannt, wobei die Auswerteeinheit Mittel aufweist, welche die Bestimmung der Ausrichtung des Bildaufnahmesystems bezüglich der geometrischen Fahrachse des Kraftfahrzeuges wenigstens aus einer ersten und einer zweiten Bildinformation des Kalibrierobjektes ermöglichen, wobei die Bildinformationen vorzugsweise in Form wenigstens eines Bilddatensatzes vorliegen. Bei diesen bekannten Lösungen ist das Kalibrierobjekt außerhalb des Fahrzeugs, beispielsweise in einer Werkstatt, angeordnet und muss für den Kalibriervorgang eigens angefahren werden.

Aus JP 06-215134 A1 ist ein Verfahren für die Bilderfassung mit einer fahrzeuggebundenen Fernsehkamera bekannt. Dabei wird die Fernsehkamera dadurch kalibriert, dass ein Teil des Fahrzeugs, wie insbesondere eine Kante der Motorhaube, von der Fernsehkamera erfasst wird und die Bildlage in Abhängigkeit von der Lage der Kante der Motorhaube korrigiert wird. Hierdurch ist zwar prinzipiell eine Kalibrierung eines Bildaufnahmesystems mit bordeigenen Mitteln möglich, so dass kein gesonderter Werkstattbesuch mehr erforderlich ist, um eine Kalibrierung mit dort vorhandenen Kalibrierobjekten durchzuführen. Angesichts der modernen Karosserieformen ergeben sich in der Praxis jedoch erhebliche Probleme, da die heute üblichen Motorhauben häufig keine ausgeprägten Kanten mehr aufweisen und so eine an Kanten orientierte Kalibrierung nicht mehr möglich ist. Des Weiteren führen heute gebräuchliche Hochglanzlackierungen zu Spiegeleffekten, die eine Erfassung von Karosseriestrukturen mit einem Bildaufnahmesystem erschweren.

Aus WO 02/50770 A1 sind ein Verfahren und eine Vorrichtung zum Kompensieren einer Dejustage einer Bilderzeugungsvorrichtung bekannt. Das Verfahren umfasst die folgenden Schritte: Erzeugen eines ersten Bildes mit einer ersten Bilderzeugungsvorrichtung, und Speichern des ersten Bildes, Erfassen von ersten Aufpunkten und/oder ersten Winkeln von ersten Kanten und/oder ersten Linien in dem ersten Bild, Vergleichen dieser aus dem ersten Bild gewonnenen Daten mit entsprechenden Daten aus einem zweiten Bild und Bestimmen von Korrekturparametern bei ggf. festgestellten Abweichungen, sowie Verwendung der Korrekturparameter für die Kompensation einer ggf. festgestellten Dejustage der Bilderzeugungsvorrichtung. Bei Bildobjekten ohne ausgeprägte Kanten und bei stark reflektierenden Flächen an Bildobjekten ist dieses Verfahren sehr schwierig durchführbar.

Die Schrift Dynamic Occlusion Analysis in Optical Flow Fields, IEEE Computer Society, USA, Bd. PAMI-07, No. 4, Seiten 374-383 von Thompsen et. al. (1985) offenbart die Erkennung von Objektgrenzen in Abhängigkeit des optischen Flusses.

Das Dokument Obstacle Detection by evaluation of optical flow fields from image sequences, Image and Vision Computing, Elsevier, Guildford, GB, Bd. 9, Nr. 3, Seiten 160-168 von Enkelmann et al. (1991) beschreibt eine Erkennung von Hindernissen und bewegten Objekten in Abhängigkeit einer Bewertung des optischen Flusses.

Das Dokument EP 1 256 487 A2 beschreibt die Erkennung einer Annäherung zu einem Objekt in Abhängigkeit des optischen Flusses.

### Vorteile der Erfindung

Die Erfindung mit den Merkmalen des Anspruchs 1 vermeidet diese Nachteile und ermöglicht auch unter schwierigen optischen Bedingungen die zuverlässige Erfassung von optischen Strukturen, wie insbesondere Kanten an Fahrzeugteilen, wie insbesondere der Motorhaube des Fahrzeugs. Die erfassten optischen Strukturen sind vorteilhaft für die Kalibrierung eines Bildaufnahmesystems mit Bordmitteln auch bei Fahrzeugen mit einem modernen Fahrzeugdesign und bei stark reflektierenden Flächen einsetzbar. Weiterhin eignet sich das erfindungsgemäße Verfahren vorteilhaft für die Erfassung des Wankwinkels bzw. der Wankrate eines Fahrzeugs.

Die Erfindung geht dabei von der Erkenntnis aus, dass durch Ableitung eines optischen Flussfelds aus von einem Bildaufnahmesystem erfassten Bildsequenzen und Projektion der Flussvektoren des optischen Flussfelds auf ein Koordinatensystem Richtungswechsel von Komponenten der Flussvektoren des Flussfelds erkennbar sind. Bildpunkte, die einen derartigen Richtungswechsel umfassen, können zu einer Kurve verbunden werden, die die optische Struktur repräsentiert.

### Zeichnung

### Zeichnung

Ausführungsbeispiele der Erfindung werden nachfolgend unter Bezug auf die Zeichnung näher beschrieben. Dabei zeigt
Figur 1: ein Fahrzeug mit einem bordeigenen Bildaufnahmesystem,
Figur 2: die beispielhafte Darstellung eines Flussfelds,
Figur 3: die Projektion eines Flussvektors auf eine senkrechte und eine waagerechte Koordinatenachse,
Figur 4: die Projektion des in Figur 1 dargestellten beispielhaften Flussfelds,
Figur 5: die Darstellung einer aus dem beispielhaften Flussfeld abgeleiteten Horizontallinie,
Figur 6: die Darstellung eines direkt gemessenen und in Reflexion gemessenen Flussfelds,
Figur 7: die Projektion des direkt und in Reflexion gemessenen Flussfelds,
Figur 8: die Darstellung der generellen Flussrichtung und deren Umklappen an einer Kante einer reflektierenden optischen Struktur,
Figur 9: die Darstellung einer aus einem Flussfeld abgeleiteten gekippten Horizontallinie.

### Beschreibung der Ausführungsbeispiele

Für viele Anwendungen in dem Bereich videobasierter Fahrerassistenzsysteme, die wenigstens ein Bildaufnahmesystem für die Erfassung des Fahrzeugumfelds aufweisen, ist die Erfassung optischer Strukturen von großer Bedeutung. Unter dem Begriff optische Struktur im Sinne dieser Anmeldung sind beispielsweise Horizontlinien innerhalb eines von dem Bildaufnahmesystem erfassten Bildes oder Berandungslinien bzw. Konturen von Objekten innerhalb eines Bilds zu verstehen. Die von dem Bildaufnahmesystem erfassten optischen Strukturen dienen beispielsweise für eine Kalibrierung des Bildaufnahmesystems oder der Erfassung der Lage und Bewegung des das Bildaufnahmesystem tragenden Fahrzeugs. Aus den erfassten optischen Strukturen abgeleitete Informationen sind weiterhin vorteilhaft für die Fahrdynamikregelung des Fahrzeugs und insbesondere auch für die Spurführung einsetzbar. Für die Kalibrierung von bordgestützten Bildaufnahmesystemen werden derzeit noch aufwendige stationäre Verfahren in den Fertigungswerken der Fahrzeughersteller durchgeführt, um beispielsweise die Einbaulage des Bildaufnahmesystems relativ zu der Fahrbahn zu bestimmen und ggf. zu korrigieren. Abgesehen von dieser Erstkalibrierung ist aber auch die Bestimmung der Einbaulage des Bildaufnahmesystems während des Betriebs des Fahrzeugs wichtig, um potenziell kritische Systemzustände erkennen zu können. Ein kritischer Systemzustand ist beispielsweise geben, wenn das Bildaufnahmesystem sich aus seiner Halterung gelöst hat und nicht mehr den für die vorgegebene Funktionalität erforderlichen Erfassungsbereich des Fahrzeugumfelds erfasst. Wird ein solcher kritischer Zustand nicht rechtzeitig erkannt, und weiterhin eine Bildauswertung durchgeführt, dann können die dabei gewonnenen Daten zu erheblichen Fehlfunktionen des Fahrerassistenzsystems beitragen. Schwierige Bedingungen sind auch gegeben, wenn in dem Erfassungsbereich des Bildaufnahmesystems spiegelnde Reflexionsflächen, wie insbesondere lackierte Karosserieteile angeordnet sind. Da die Informationen in Spiegelungen von Bildverarbeitungsprozessen an sich nicht von in direkter Sicht gewonnenen Daten unterschieden werden können, können auftretende Spiegelungen zu erheblichen Fehlinterpretationen der aus der Umgebung des Fahrzeugs gewonnenen Daten führen. Die Erfindung löst diese Probleme durch Auswertung des von dem Bildaufnahmesystem erfassten optischen Flusses.

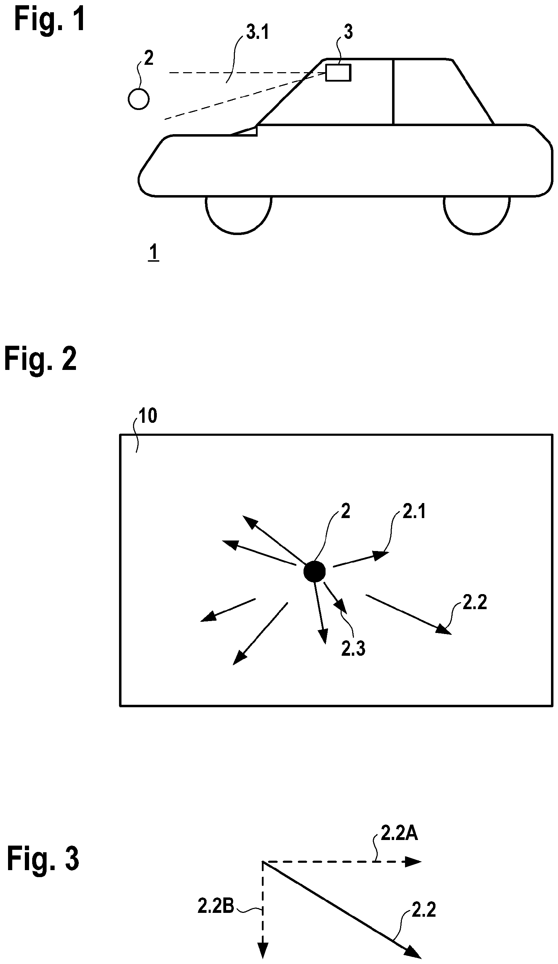

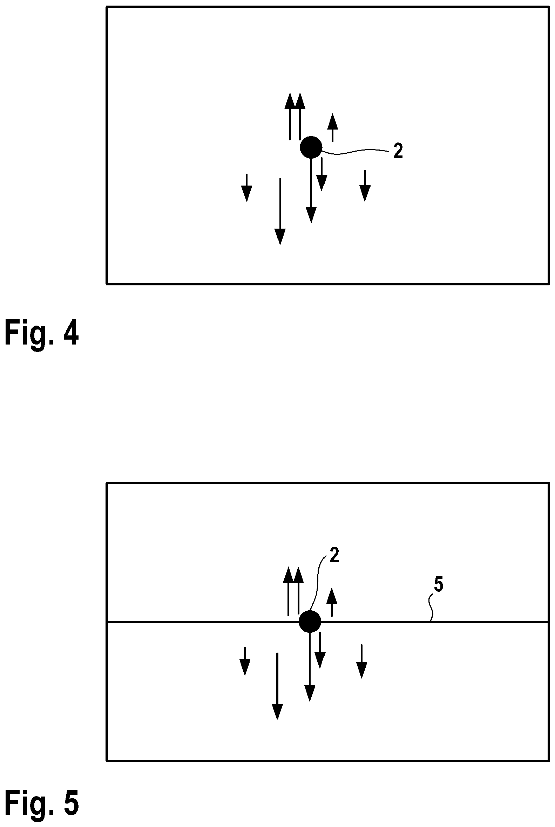

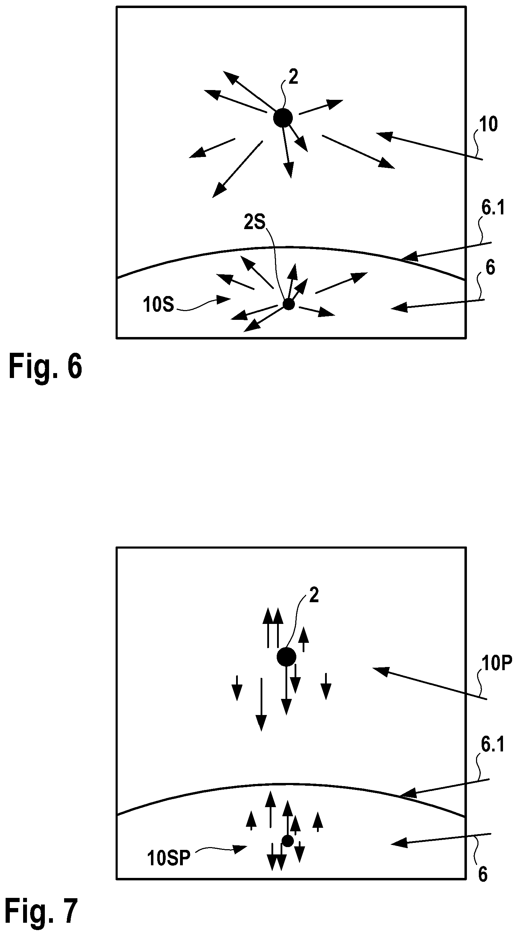

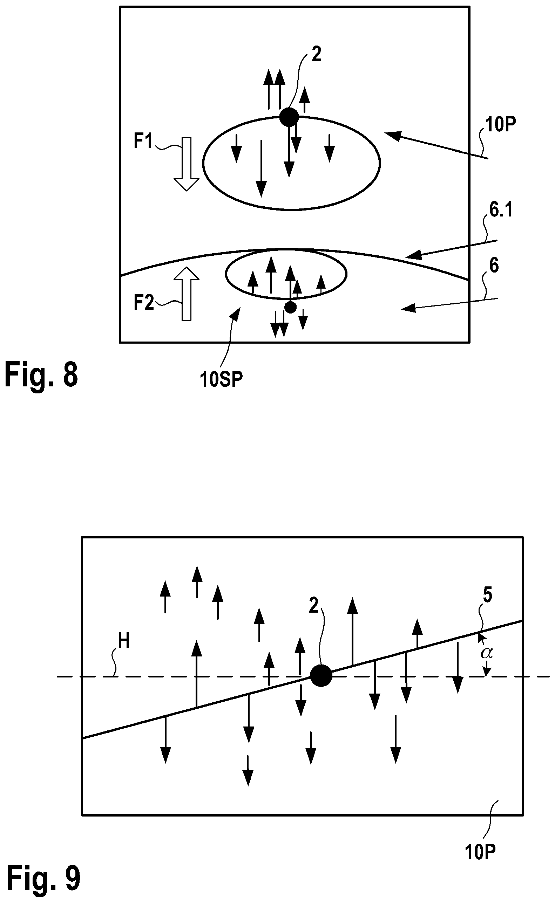

Figur 1 zeigt ein schematisch dargestelltes Fahrzeug 1 mit einem bordeigenen Bildaufnahmesystem 3. In diesem Ausführungsbeispiel ist das Bildaufnahmesystem 3 in dem Fahrzeug 1 vorzugsweise hinter der Windschutzscheibe in dem Bereich des Innenrückspiegels angeordnet. Der Erfassungsbereich 3.1 des Bildaufnahmesystems 3 ist in Vorwärtsfahrtrichtung des Fahrzeugs 1 ausgerichtet. Das Bildaufnahmesystem 3 ist vorzugsweise ein Videosensor, der beispielsweise entweder als CCD- oder CMOS-Kamera ausgeführt ist. Vorzugsweise ist das Bildaufnahmesystem 3 Bestandteil eines Fahrerassistenzsystems, das den Fahrer des Fahrzeugs 1 bei der Führung des Fahrzeugs 1 unterstützt, indem es beispielsweise eine automatische Spurführung des Fahrzeugs 1 ermöglicht. Dazu erfasst das Bildaufnahmesystem 3 Bilddaten aus dem Umfeld des Fahrzeugs 1, die aus dem Erfassungsbereich 3.1 des Bildaufnahmesystems 3 stammen. An die Genauigkeit des Bildaufnahmesystems 3 werden sehr hohe Anforderungen gestellt. Sie ist praktisch nur durch eine regelmäßige Kalibrierung des Bildaufnahmesystems 3 zu erreichen, die bei der Fahrzeugfertigung, im Reparaturfall und im Zuge der regelmäßigen Wartungsintervalle durchzuführen ist. Für die Kalibrierung des Bildaufnahmesystems 3 sind spezielle Kalibrierobjekte oder Kalibriertargets erforderlich, die üblicherweise bei einem Werkstattaufenthalt vor das Fahrzeug gestellt und präzise auf dieses ausgerichtet werden müssen. Die exakte Ausrichtung zum Fahrzeug ist mühsam und erfordert eine spezielle Gerätetechnik. Zwar wurde schon vorgeschlagen, die Kalibrierung eines bordeigenen Bildaufnahmesystems mit Bordmitteln autonom durchzuführen und dazu die Kante der von dem Bildaufnahmesystem erfassten Motorhaube des Fahrzeugs als Kalibrierobjekt zu benutzen. In der Praxis scheitert dies jedoch häufig daran, dass infolge des modernen Fahrzeugdesigns die Motorhauben von Fahrzeugen keine als Kalibrierobjekte geeigneten geraden Kanten mehr aufweisen. Auch spiegelnde Reflexionsflächen in dem Erfassungsbereich 3.1 des Bildaufnahmesystems erschweren die Erfassung eines Kalibrierobjekts, wie beispielsweise die Motorhaube des Fahrzeugs 3. Die Erfindung ermöglicht eine autonome, das heißt werkstattunabhängige Kalibrierung eines bordeigenen Bildaufnahmesystems mit Bordmitteln auch unter schwierigen optischen Bedingungen durch Auswertung des optischen Flusses. Durch den Vergleich von Bildern einer von dem Bildaufnahmesystem erfassten Bildsequenz lässt sich der optische Fluss bestimmen, das heißt die Verschiebung von beobachteten Objekten innerhalb der Bildsequenz aufgrund der relativen Bewegung zwischen dem Bildobjekt und dem Bildaufnahmesystem. Figur 2 zeigt die beispielhafte Darstellung eines optischen Flussfelds in einem von dem Bildaufnahmesystem 3 erfassten Bild. Der in dem Zentrum des Bilds mit Bezugsziffer 2 gekennzeichnete Punkt repräsentiert den so genanten Fluchtpunkt FOE (Focus of Expansion). Von dem Fluchtpunkt 2 gehen Flussvektoren 2.1, 2.2, 2.3,...aus. Über den optischen Fluss lassen sich folgende Aussagen treffen, die für das Verständnis der Erfindung wichtig sind. Optischer Fluss wird durch eine relative Bewegung zwischen dem Bildaufnahmesystem und den in dem Erfassungsbereich des Bildaufnahmesystems erfassten Objekten erzeugt. Es gibt so genannte stationäre Punkte bzw. Strukturen oder Bildmerkmale, die sich in aufeinander folgenden Bildern einer Bildsequenz nicht bewegen. Dies kann folgende Gründe haben: Die beobachteten Objekte sind so weit entfernt, dass eine ggf. vorhandene relative Bewegung bei der Abbildung bzw. der Aufnahme des das Objekt umfassenden Bildes durch einen quantisierten Bildsensor, wie CCD oder CMOS, des Bildaufnahmesystems 3 keine Rolle spielt. Solche Objekte gehören zu den Hintergrundstrukturen. Das beobachtete Objekt bewegt sich relativ zu dem Bildaufnahmesystem nicht. Hierbei kann es sich um Teile des eigenen Fahrzeugs oder ein Fremdfahrzeug handeln, das sich vor dem eigenen Fahrzeug befindet und sich mit gleicher Geschwindigkeit in die gleiche Richtung fortbewegt. Derartige stationäre Punkte bieten eine mathematisch starke Bedingung für das Vorliegen eines Fluchtpunkts 2 (FOE). Das Flussfeld, das durch eine rotatorische Bewegung (Winkelbewegung) des Bildaufnahmesystems erzeugt wird, ist im Wesentlichen unabhängig von der Tiefenstaffelung der aufgenommenen Objekte. Dagegen hängt bei einer translatorischen, auch seitlichen Bewegung das Flussfeld von der Tiefenstaffelung der Objekte ab. Dabei erzeugen nahe Objekte einen relativ großen optischen Fluss, während weiter entfernte Objekte einen kleineren optischen Fluss erzeugen. Das bedeutet, dass eine translatorische Bewegung die Länge der Flussvektoren 2.1,2.2,2.3, des optischen Flussfeldes beeinflusst, nicht aber den scheinbaren Ursprungsort der Vektoren, den Fluchtpunkt 2 (FOE). Dieser Fluchtpunkt 2 ist die Projektion der Bewegungsrichtung des Bildaufnahmesystems auf die Bildebene. Da das von dem Bildaufnahmesystem aus seinem Erfassungsbereich 3.1 erfasste Bild lediglich einen Teilbereich der gesamten Bildebene darstellt, muss der Fluchtpunkt 2 nicht notwendigerweise in dem erfassten Bild liegen. Bei einer rein rotatorischen Bewegung, zum Beispiel, liegt der Fluchtpunkt 2 im Unendlichen in der entsprechenden Bewegungsrichtung. Wie aus Figur 2 anschaulich hervorgeht, scheint der Fluchtpunkt 2 der Ursprungsort aller Flussvektoren 2.1,2.2,2.3,... zu sein. Dies gilt allerdings streng nur bei der Aufnahme einer statischen Szene. Im Umkehrschluss kann, bei bekannten Koordinaten des Fluchtpunkts 2 und bekannter Eigenbewegung (Rotation und Translation) aus den dann beobachtbaren Flussvektoren eine Detektion bewegter Objekte erfolgen. Mathematisch gesehen kann der Fluchtpunkt 2 (eine statische Szene unterstellt) als der Punkt mit der maximalen Divergenz bei verschwindender Rotation charakterisiert werden. Bei einer rein translatorischen Bewegung wird im Prinzip ein Norm-Fluchtpunkt beobachtet. Durch eine zusätzliche Rotationsbewegung wird der Fluchtpunkt verschoben und aus der Verschiebung lässt sich bei bekanntem Öffnungswinkel der in dem Bildaufnahmesystem eingesetzten Optik direkt die Winkeleigenbewegung des Bildaufnahmesystem bzw. des das Bildaufnahmesystem tragenden Fahrzeugs, bestimmen. Beobachtet man nun bei einem hinreichend dichten optischen Flussfeld die Projektion der Flussvektoren des optischen Flussfelds auf ein insbesondere rechtwinkliges Koordinatensystem, insbesondere die auf die vertikale Bildachse projizierte Vektorkomponente, für jede Spalte oder Gruppen von Spalten des aus Zeilen und Spalten zusammengesetzten Bildes, dann ergibt sich eine Art Grenzlinie, an der die Richtung der durch Projektion auf die vertikale Bildachse entstandenen Vektorkomponente umklappt. Auf dieser Grenzlinie liegt auch der Fluchtpunkt (FOE). Diese Grenzlinie beschreibt aber auch den Horizont der aktuellen Bewegung. Für den Fall, dass keine Nickbewegung des Fahrzeugs auftritt, stimmt dieser Horizont mit dem Horizont der Ebene überein, auf der sich das Fahrzeug bzw. das mit dem Fahrzeug verbundene Bildaufnahmesystem fortbewegen. Sind weiterhin in dem Erfassungsbereich 3.1 des Bildaufnahmesystems 3 spiegelnde Flächen, zum Beispiel eine lackierte Motorhaube des Fahrzeugs 1, vorhanden, dann wird das Flussfeld an dieser spiegelnden Fläche reflektiert. Dies macht sich bei einer auf die vertikale Bildachse projizierten Komponente des Flussvektors in einer Richtungsänderung dieser Vektorkomponente bemerkbar. Wird der Punkt, in dem diese Richtungsänderung stattfindet, für jede Spalte oder auch eine Gruppe von Spalten erfasst, dann lässt sich aus diesen einzelnen Punkten ein Kurvenverlauf rekonstruieren, der der Kontur der spiegelnden Fläche entspricht. Bei Kenntnis der Konstruktion des Fahrzeugs und somit der exakten Lage der Motorhaube, sowie der Abbildungseigenschaften des Bildaufnahmesystems kann aus dem Verlauf der punktweise erfassten Kontur der spiegelnden Fläche auf die Ausrichtung des Bildaufnahmesystems 3 zu dem Fahrzeug 1 geschlossen werden. Dieser Sachverhalt wird im Folgenden nochmals eingehend anhand der Figuren 3 bis 8 erläutert. Figur 3 verdeutlicht die Projektion eines Flussvektors eines optischen Flussfelds auf eine waagerechte und senkrechte Koordinatenachse. Beispielsweise wird dadurch der Flussvektor 2.2 (Figur 2) in eine waagerechte Komponente 2.2A und eine senkrechte Komponente 2.2B zerlegt. Die Projektion der Flussvektoren des in Figur 2 dargestellten Flussfelds führt zu der in Figur 4 sichtbaren Darstellung. Hierbei sind nur die auf die vertikale Bildachse projizierten Komponenten der Flussvektoren wiedergegeben, während die auf die waagerechte Achse projizierten Komponenten nicht dargestellt sind. Wenn für jede Spalte des aus Zeilen und Spalten aufgebauten Bildes (Figur 4) derjenige Bereich aufgesucht wird, in dem eine Richtungsumkehr der auf die vertikale Achse projizierten Komponenten des Flussvektors stattgefunden hat, ergibt sich für jede Spalte ein Punkt oder ein Punktebereich. Im Idealfall umfasst dieser Bereich gerade 1 Pixel der jeweiligen Spalte. Eine Verbindung dieser Punkte ergibt die in Figur 5 mit Bezugsziffer 5 bezeichnete horizontal verlaufende Linie. Auf dieser Linie 5 liegt auch der Fluchtpunkt 2. Für den Fall, dass das Umklappen der Vektorkomponenten über einen größeren Punktebereich pro Spalte stattgefunden hat, kann eine entsprechend angenäherte Verbindungskurve durch diese Punktebereiche gelegt werden, die diese Punktebereiche am besten annähert. Figur 6 zeigt zunächst ein in direkter Sicht gemessenes Flussfeld 10 mit seinem Fluchtpunkt 2. Weiterhin zeigt Figur 6 ein an einer spiegelnden Fläche, beispielsweise der Motorhaube 6 des Fahrzeugs 1, reflektiertes Flussfeld 10S mit seinem Fluchtpunkt 2S. Die Kante oder Kontur der als spiegelnde Fläche wirkenden Motorhaube 6 ist mit Bezugsziffer 6.1 bezeichnet. Figur 7 zeigt die projizierten Flussfelder 10P und 10SP, wobei hier nur die jeweils auf die vertikale Achse projizierten Komponenten dargestellt sind. Mit Bezugsziffer 6 ist wiederum die spiegelnde Motorhaube, mit Bezugsziffer 6.1 deren Kante bezeichnet. Figur 8 zeigt eine im Wesentlichen der Figur 7 entsprechende Darstellung. Hervorgehoben sind jedoch hier die generellen Flussrichtungen der projizierten Flussfelder 10P und 10SP, die durch die Pfeile F1 und F2 repräsentiert sind. Dabei repräsentiert der Pfeil F1 die generelle Flussrichtung des Flussfelds 10P und der Pfeil F2 die generelle Flussrichtung des Flussfelds 10SP. Aus der Darstellung ist ersichtlich, dass die Richtung der projizierten Flussfelder in dem Bereich der Kante 6.1 der Motorhaube 6 wechselt oder "umklappt". Dadurch kann diese optische Struktur selbst unter widrigen Beobachtungsbedingungen mit großer Sicherheit erkannt werden. Bei Kenntnis der Eigenschaften des Fahrzeugs 1 und seiner Komponenten, das heißt, im vorliegenden Fall, insbesondere der Einbaulage der Motorhaube 6, und in Kenntnis der Abbildungseigenschaften des Bildaufnahmesystems 3, kann somit aus der Lage der Kante 6.1 in dem von dem Bildaufnahmesystem 3 gewonnenen Bild auf die Ausrichtung des Bildaufnahmesystems 3 in Bezug auf das Fahrzeug 1 geschlossen werden. Durch Vergleich der erfassten Lage mit einem Sollzustand ist somit eine Online-Kalibrierung des Bildaufnahmesystems 3 möglich. Eine einmal vorgenommene Kalibrierung kann während der Laufzeit des Fahrzeugs auch jederzeit auf einfache Weise überprüft werden. Für den Fall, dass die Überprüfung eine zu starke Abweichung von Sollwerten ergibt, die auch mit Bordmitteln nicht zu beheben ist, kann weiterhin, in vorteilhafter Weise, auch ein Warnhinweis an den Fahrer gegeben werden, der beispielsweise die Aufforderung zu einem Werkstattbesuch umfasst.

In besonders vorteilhafter Weise lassen sich mit dem erfindungsgemäßen Verfahren auch der Wankwinkel des Fahrzeugs 1 und dessen Wankrate ermitteln. Viele videobasierte Systeme (Bildaufnahmesystem 3) schätzen neben dem Zustand und den Verlauf der Fahrbahn auch zusätzlich den Bewegungszustand des Fahrzeugs. Die möglichst genaue Kenntnis des Bewegungszustands erleichtert beispielsweise die Entscheidung, ob ein Fremdfahrzeug gefahrlos überholt werden kann oder ob das eigene Fahrzeug eine enge Tordurchfahrt passieren kann. Wird der Wankwinkel dabei nicht korrigiert, kann dieses Versäumnis nachteilige Auswirkungen auf die Schätzung oder Bestimmung anderer Zustandsgrößen, wie insbesondere den Nick- oder Gierwinkel haben. Die aus diesen Größen ohne Berücksichtigung des Wankwinkels bestimmte Rotationsrichtung kann beispielsweise Komponenten des Wankwinkels umfassen. Dies kann zur Folge haben, dass eine dynamische Wank- und Gierbewegung festgestellt wird, obwohl lediglich eine reine Gierbewegung stattfindet. Der Wankwinkel kann durch Beobachtung der in Figur 5 dargestellten Linie 5 erfasst werden, die dort horizontal verläuft. Weicht die Linie 5, wie in Figur 8 dargestellt, von der Horizontalen H ab, ergibt die Winkelabweichung den Wankwinkel a. Durch kontinuierliches Überwachen der Lage der Linie 5 in Bezug auf die Horizontale H kann auf einfache Weise auch die Wankrate bestimmt werden.

## Patentansprüche

1. Verfahren für die Erfassung eines Wankwinkels (α) eines Fahrzeugs (1), wobei das Verfahren die folgenden Schritte aufweist:
- mit einem bordeigenen Bildaufnahmesystem (3) werden Bildsequenzen aus dem Umfeld des Fahrzeugs (1) erfasst;
- aus den von dem Bildaufnahmesystem (3) erfassten Bildsequenzen wird ein optisches Flussfeld (10) abgeleitet;
- die Flussvektoren (2.1,2.2,2.3,...) des optischen Flussfelds (10) werden durch Projektion auf ein Koordinatensystem des von dem Bildaufnahmesystem (3) aufgenommenen Bilds in Komponenten (2.2A,2.2B) zerlegt;
- für jede Spalte wird wenigstens eine Komponente (2.2A,2.2B) der Flussvektoren (2.1,2.2,2.3,...) auf einen Richtungswechsel untersucht, wobei sich für jede Spalte ein Punkt oder ein Punktebereich ergibt, für den eine Richtungsumkehr der auf die vertikale Achse projizierten Komponenten des Flussvektors stattgefunden hat
- einen Richtungswechsel einer Vektorkomponente (2.2A,2.2B) umfassende Bildpunkte werden zu einer horizontal verlaufende Linie (H, 5) verbunden, welche den Horizont der aktuellen Bewegung beschreibt;
**dadurch gekennzeichnet, dass** der folgende Schritt durchgeführt wird
- aus der Abweichung der Kurve (H) von der Horizontalen wird der Wankwinkel (α) bestimmt.

## Claims

1. Method for detecting a rolling angle (α) of a vehicle (1), wherein the method comprises the following steps:
- image sequences from the surroundings of the vehicle (1) are detected with an on-board image-recording system (3);
- an optical flux field (10) is derived from the image sequences detected by the image-recording system (3);
- the flux vectors (2.1, 2.2, 2.3, ...) of the optical flux field (10) are decomposed into components (2.2A, 2.2B) by a projection onto a coordinate system of the image recorded by the image-recording system (3);
- for each column at least one component (2.2A, 2.2B) of the flux vectors (2.1, 2.2, 2.3, ...) is examined for a change of direction, wherein a point or a point region for which a change of direction of the components of the flux vector which are projected onto the vertical axis has taken place is obtained for each column,
- pixels comprising a change of direction of a vector component (2.2A, 2.2B) are connected to a horizontally extending line (H, 5) which describes the horizon of the current movement;
**characterized in that** the following step is carried out:
- the rolling angle (α) is determined from the deviation of the curve (H) from the horizontal.

## Revendications

1. Procédé de détection d'un angle de roulis (α) d'un véhicule (1), dans lequel le procédé présente les étapes suivantes:
- avec un système de prise d'images embarqué (3) on détecte des séquences d'images de l'environnement du véhicule (1);
- on déduit un champ de flux optique (10) à partir des séquences d'images détectées par le système de prise d'images (3);
- on décompose les vecteurs de flux (2.1, 2.2, 2.3, ...) du champ de flux optique (10) en composantes (2.2A, 2.2B) par projection sur un système de coordonnées de l'image enregistrée par le système de prise d'images (3) ;
- pour chaque colonne, on examine au moins une composante (2.2A, 2.2B) des vecteurs de flux (2.1, 2.2, 2.3, ...) concernant un changement de direction, dans lequel il en résulte pour chaque colonne un point ou une zone de point pour lequel/laquelle il s'est produit une inversion de direction de la composante du vecteur de flux projetée sur l'axe vertical;
- des points d'image comprenant un changement de direction d'une composante de vecteur (2.2A, 2.2B) sont liés à une ligne s'étendant horizontalement (H, 5), qui décrit l'horizon du mouvement actuel;
**caractérisé en ce que** l'on exécute l'étape suivante:
- on détermine l'angle de roulis (α) à partir d'un écart de la courbe(H) par rapport à l'horizontale.
